# EUROPÄISCHE PATENTSCHRIFT

(11) **EP 2 032 403 B1**
(45) Veröffentlichungstag und Bekanntmachung des Hinweises auf die Patenterteilung: **14.08.2013**
(21) Anmeldenummer: 07730075.4
(22) Anmeldetag: 12.06.2007
(51) Int. Cl.: B60T 8/17, B62L 3/08, B60T 7/12

(54) **VERFAHREN UND VORRICHTUNG ZUR ERKENNUNG DER EINLEITUNG DES ANFAHRVORGANGS EINES KRAFTRADES DURCH EINEN FAHRER**
METHOD AND DEVICE FOR DETECTING THE INITIATION OF THE STARTING PROCESS OF A MOTORCYCLE BY A RIDER
PROCÉDÉ ET DISPOSITIF DE DÉTECTION DE L'INITIATION D'UN PROCESSUS DE DÉMARRAGE D'UNE MOTOCYCLETTE PAR UN CONDUCTEUR

(30) Priorität: 14.06.2006 DE 102006027999; 30.05.2007 DE 102007025272
(43) Veröffentlichungstag der Anmeldung: 11.03.2009
(73) Patentinhaber: Continental Teves AG & Co. OHG, 60488 Frankfurt (DE); Baijens, Mark, 63067 Offenbach (DE)
(72) Erfinder: BAIJENS, Mark, 63067 Offenbach (DE); CRESS, Torsten, 36381 Schlüchtern (DE); KREMER, Michael, 64846 Gross-Zimmern (DE); WOYWOD, Jürgen, 64546 Mörfelden (DE); MEURERS, Thomas, D-60488 Frankfurt (DE); WISCHER, Patrick, 65824 Schwalbach (DE)
(86) Internationale Anmeldenummer: PCT/EP2007/055746
(87) Internationale Veröffentlichungsnummer: WO 2007/144337

(56) Entgegenhaltungen:
- WO-A-2004/071833
- DE-A1-102004 051 119

## Beschreibung

Die Erfindung betrifft ein Verfahren gemäß Oberbegriff von Anspruch 1 sowie eine Vorrichtung gemäß Oberbegriff von Anspruch 6.

Das Kraftrad hat sich im Laufe der letzten Jahrzehnte von einem kostengünstigen Fortbewegungsmittel zu einem Freizeitgefährt entwickelt, bei welchem vermehrt sowohl die Sicherheit als auch der Komfort des Fahrers in den Vordergrund gerückt wird.

Ähnlich wie bei den Automobilen vor einigen Jahren werden zunehmend auch Krafträder mit Anti-Blockiersystemen (ABS) ausgerüstet. Aus der EP 0 548 985 B1 ist beispielsweise eine Blockierschutzvorrichtung für Krafträder bekannt. Ferner ist aus der DE 40 00 212 A1 ein Verfahren zum blockiergeschützten Bremsen eines Kraftrades und zum Bestimmen des Haftbeiwertes bekannt.

Traditionell haben Krafträder je ein Betätigungselement für jeden der beiden Bremskreise. Meist wird die Vorderradbremse durch einen "Handbremshebel" und die Hinterradbremse durch einen "Fußbremshebel" betätigt.

Im Zusammenhang mit Motorrädern versteht man unter einer "Integralbremsanlage" eine Bremsanlage, bei der bei Betätigung des Handbremshebels bzw. des Fußbremshebels zusätzlich die Bremse des zweiten Bremskreises durch einen aktiven Druckaufbau eingebremst wird. Durch Betätigen eines einzigen Betätigungselements können also beide Bremsen angesteuert werden. Werden bei Betätigung des Hand- und des Fußbremshebels jeweils beide Bremsen angesteuert, so bezeichnet man dies als Vollintegralbremse. Es sind jedoch auch Kombinationen möglich, bei denen ein Bremshebel auf ein Rad und der andere Bremshebel auf beide Räder wirkt (Teilintegralbremse). Integralbremsanlagen für Krafträder sind beispielsweise aus der DE 38 03 563 A1 und DE 103 16 351 A1 bekannt.

Aufgrund der erhöhten Sicherheit und/oder des gesteigerten Komforts ist es zu erwarten, dass es in Zukunft in immer stärkerem Maße zum Einsatz von Teil- und Vollintegralbremsen bei Motorrädern kommen wird, welche durch aktiven Druckaufbau an Vorder- und/oder Hinterrad den Fahrer beim Bremsvorgang unterstützen und damit für einen optimierten Bremsweg sorgen.

Außerdem gewinnen im Bereich des Motorrades Fahrerassistenzsysteme zunehmend an Bedeutung. So steigt insbesondere die Nachfrage nach kostengünstigen Fahrerassistenzsystemen, welche die bestehende Hardware ausnutzen, um weitere Komfort- und/oder Sicherheitsfunktionen durchzuführen.

Zu den oben genannten Motorrad-Fahrerassistenzsystemen gehören auch Systeme mit Halte- und/oder Anfahr-Funktion, welche das Motorrad im Stillstand, z.B. an einem Hang, halten und/oder auf Wunsch des Fahrers ein Anfahren ermöglichen.

Im Bereich der Pkw sind Verfahren zur Anfahrerkennung bekannt, z.B. aus der DE 103 06 363 A1 oder der gattungsgemäßen WO 2004/071833 A1, welche u.a. das Motormoment auswerten. Zur Erkennung, ob ein gültiger Anfahrwunsch vorliegt, werden dabei die Informationen benötigt, ob Kraftschluss zwischen Motor und Antriebsstrang besteht und ob der Fahrer durch Erhöhung des Motormoments das Fahrzeug aus dem Stillstand bewegen möchte oder kann. Hierzu werden z.B. Signale der Kupplung und der Ganginformation sowie das Motormoment herangezogen. Im Motorrad stehen diese Informationen aufgrund der geringeren Vernetzung der verschiedenen Steuergeräte allerdings üblicherweise nicht zur Verfügung.

Der Erfindung liegt daher die Aufgabe zugrunde, ein Verfahren und eine Vorrichtung zur Verfügung zustellen, mit welchem/welcher die Einleitung des Anfahrvorgangs durch den Fahrer zuverlässig erkannt wird, auch wenn keine Information über das Motormoment zur Verfügung steht.

Diese Aufgabe wird erfindungsgemäß durch das Verfahren gemäß Anspruch 1 sowie die Vorrichtung gemäß Anspruch 6 gelöst.

Der Erfindung liegt der Gedanke zugrunde, beide Zustandsgrößen Drosselklappenwinkel und Motordrehzahl zu erfassen und dann zu analysiere, um anhand der erhaltenen Informationen eine Einleitung eines Anfahrvorgangs zu erkennen.

Bevorzugt wird zur Analyse der Zustandsgröße oder der Zustandsgrößen für jede Zustandsgröße die zeitliche Ableitung der Zustandsgröße bestimmt. Durch Zuhilfenahme der zeitlichen Änderung einer Zustandsgröße lässt es sich besser einschätzen, ob es sich bei einer Änderung einer Zustandsgröße um eine plötzliche, zufällige oder vom Fahrer nicht beabsichtigte Änderung der Zustandsgröße oder um eine nachhaltige, vom Fahrer eingeleitete Änderung der Zustandsgröße handelt. Damit kann eine Einleitung des Anfahrvorgangs durch den Fahrer zuverlässiger erkannt werden.

Bevorzugt wird die Anfahrerkennung im Rahmen einer Halte- und Anfahr-Funktion eines Fahrerassistenzsystems durchgeführt. Bei einer Halte-Funktion wird üblicherweise in mindestens einem Radbremskreis des Motorrades ein Bremsdruck zum Halten des Kraftrades aufrechterhalten. Wenn nun erkannt wird, dass der Fahrer wieder anfahren möchte, so wird gemäß einer bevorzugten Ausführungsform des erfindungsgemäßen Verfahrens der durch die Halte-Funktion aufrechterhaltene Bremsdruck wieder abgebaut, um dem Fahrer das Anfahren zu ermöglichen. Der Abbau geschieht besonders bevorzugt über eine lineare Funktion. Dadurch erhält der Fahrer Gelegenheit, den Gashebel entsprechend zu betätigen, so dass das Motorrad ohne Zurückrollen anfährt. Ganz besonders bevorzugt ist die Steigung der linearen Funktion vorgegeben.

Gemäß einer anderen bevorzugten Ausführungsform wird der Abbau des Bremsdrucks in Abhängigkeit von einem Umgebungsparameter und/oder einer Zustandsgröße des Kraftrades durchgeführt. Wird der Bremsdruck über eine lineare Funktion reduziert, so wird deren Steigung in Abhängigkeit des Umgebungsparameters und/oder der Zustandsgröße des Kraftrades gewählt. Besonders bevorzugt handelt es sich bei dem Umgebungsparameter um die Stärke der Neigung der Fahrbahn und bei der Zustandsgröße des Kraftrades um den Gradienten der Motordrehzahl.

Falls bekannt, wird bevorzugt auch zusätzlich das Motormoment analysiert und zur Erkennung des Anfahrvorgangs herangezogen.

Die Erfindung betrifft auch eine Vorrichtung, in welcher ein Verfahren gemäß mindestens einem der Ansprüche 1 bis 5 durchgeführt wird.

Ein Vorteil der Erfindung liegt in einer sicheren Anfahrerkennung auch ohne Vorliegen des Motormomentes, welches im Pkw zur Anfahrerkennung verwendet wird, aber üblicherweise im Bremsensteuergerät eines Motorrades nicht zur Verfügung steht. Hierdurch wird die Sicherheit beim Anfahren verbessert und damit der Motorradfahrer entlastet. Als Folge kann sich der Motorradfahrer besser auf den Verkehr konzentrieren. Des Weiteren ist es vorteilhaft, dass für die erfindungsgemäße Anfahrerkennung keine zusätzlichen Sensoren und/oder eine zusätzliche Vernetzungen von Steuergeräten nötig sind. Dadurch lässt die Erfindung sich kostengünstig realisieren.

Weitere bevorzugte Ausführungsformen der Erfindung ergeben sich aus den Unteransprüchen und der nachfolgenden Beschreibung anhand von Figuren.

Es zeigen schematisch
- Fig. 1: eine Darstellung eines Motorrades an einem Hang,
- Fig. 2: ein Flussdiagramm eines Verfahrens zur Halte- und Anfahr-Funktion, und
- Fig. 3: ein Flussdiagramm eines Beispiels eines Verfahrens.

Das erfindungsgemäße Verfahren zur Anfahrtserkennung wird im Folgenden in Zusammenhang mit einer Halte- und/oder Anfahrfunktion eines elektronischen Motorradbremssystems näher erläutert. Die Anfahrtserkennung kann jedoch auch im Rahmen anderer Motorrad-Assistenzsysteme durchgeführt werden. Eine erfindungsgemäße Anfahrtserkennung kann natürlich auch im Pkw durchgeführt werden.

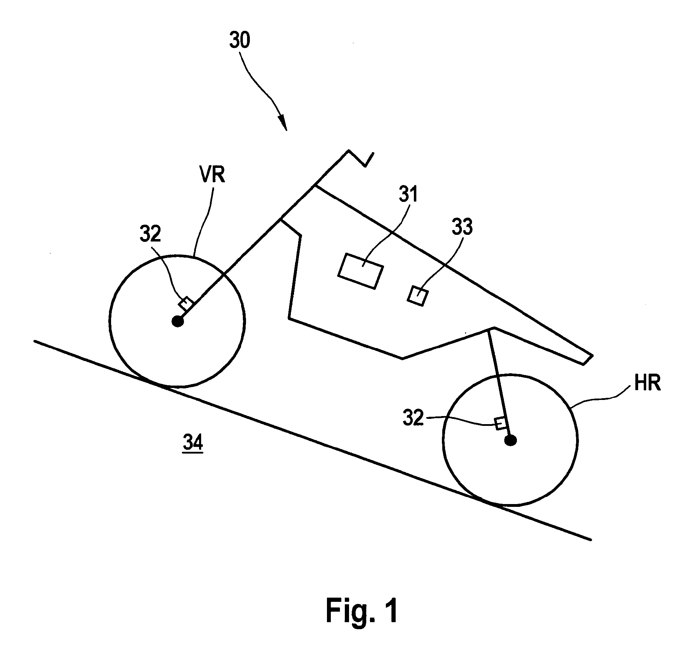

Fig. 1 zeigt eine schematische Darstellung eines Motorrades an einem Hang. Motorrad 30 mit Steuergerät 31, je einem Raddrehzahlsensor 32 an Vorderrad VR und Hinterrad HR sowie Längsbeschleunigungssensor 33 befindet sich an Hang 34. Steuergerät 31, z.B. ECU (Electronic Control Unit), ist für die Steuerung der elektronischen Bremsanlage und auch für die Steuerung der Durchführung einer Halte- und Anfahr-Funktion ausgelegt. Beschleunigungssensor 33 ist beispielsgemäß am Rahmen des Kraftrades angeordnet.

Im Folgenden wird zuerst kurz die Halte- und Anfahr-Funktion erläutert, bevor Ausführungsbeispiele der Anfahrtserkennung ausgeführt werden.

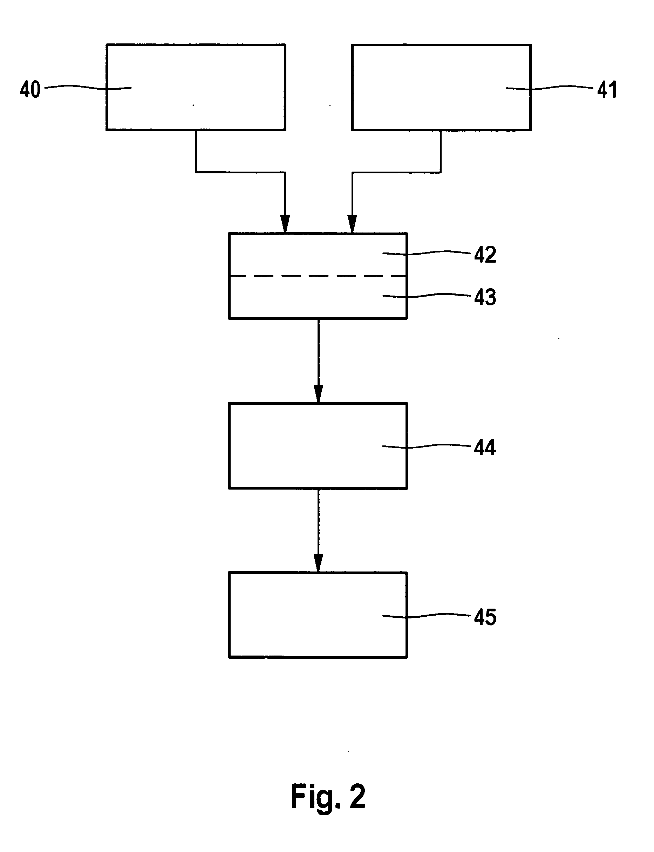

In Fig. 2 ist in Form eines schematischen Flussdiagramms ein Verfahren zur Halte- und Anfahr-Funktion dargestellt. In Block 40 wird überprüft, ob Motorrad 30 stillsteht oder annährend stillsteht. In Block 41 wird überprüft, ob eine Aktivierungsbedingung erfüllt ist. Wenn beide Bedingungen gleichzeitig oder zeitnah nacheinander erfüllt sind, so wird in einem Radbremskreis, beispielsweise in dem Hinterradbremskreis, zuerst ein Bremsdruck aktiv aufgebaut (Block 42) und dann dieser Bremsdruck (annährend) gehalten (Block 43). In Block 44 wird überprüft, ob der Fahrer anfährt oder anfahren möchte (Anfahrerkennung). Wenn dies der Fall ist, wird der bis dahin aufrechterhaltene Bremsdruck (Block 43) wieder abgebaut (Block 45).

Durch den aktiven Druckaufbau (Block 42 und 43), z.B. im Hinterradbremskreis, ist es also möglich, Fahrzeug 30 an Berg 34 sicher zu halten, ohne dass vom Fahrer eine weitere Bremsenbetätigung an einem der Bremshebel notwendig ist.

Ein Stillstehen oder annährendes Stillstehen des Kraftrades 30 (Block 40) wird z.B. anhand der Signale der Raddrehzahlsensoren 32 erkannt. Ist die Raddrehzahl z.B. des Hinterrades HR kleiner als ein vorgegebener Schwellenwert, so wird ein (annährender) Stillstand des Motorrades 30 erkannt. Anstelle der Raddrehzahl kann auch eine andere Raddrehgeschwindigkeitsgröße, welche der Raddrehzahl entspricht, zur Stillstandserkennung herangezogen werden.

Die Aktivierungsbedingung (Block 41) ist z.B. ein Erkennen des Stehens des Kraftrades 30 auf einer geneigten Fahrbahn 34. Das Erkennen einer geneigten Fahrbahn 34 kann z.B. anhand eines Längsbeschleunigungssensors 33 geschehen. Durch Sensor 33 wird die Hangneigung erkannt und gemessen. Ab einer einstellbaren Schwelle (z.B. 5% Steigung bzw. Gefälle) ist das System bezüglich der Halte-Funktion in Bereitschaft.

Wird also Fahrzeug 30 an einem ausreichend steilen Hang zum Stillstand gebracht (Block 40), so wird vom Bremssystem ein definierter Druck im Hinterradbremskreis aufgebaut (Block 42). Der Bremsdruck wird dann vom System über ein Trennventil "eingesperrt", d.h. der Bremsdruck wird (annährend) konstant gehalten (Block 43). Der Druck bleibt auch dann (annährend) konstant, wenn der Fahrer nach dem Stillstand des Kraftrades 30 den Handbremshebel und/oder Fußbremshebel wieder löst.

Die Größe des im Hinterradbremskreis aufgebauten Bremsdruckes hängt z.B. vom Fahrzeugtyp und/oder der jeweiligen gemessenen Hangneigung ab. Die Größe des Bremsdruckes kann aber auch alternativ oder zusätzlich von dem Beladungszustand des Kraftrades 30 abhängen. Beispielsgemäß ist der Druck gerade so bemessen, dass Motorrad 30 auch bei voller Beladung sicher am Hang 34 gehalten wird.

Die Aktivierungsbedingung (Block 41) kann aber auch eine Betätigung eines Bremsbetätigungselements sein, z.B. des Handbremshebels. Dann braucht Motorrad 30 keinen Längsbeschleunigungssensor 33 zu besitzen. Die Aktivierung des aktiven Bremsdruckaufbaus erfolgt nun also fahrerseitig über eine Betätigung eines Bremshebels bei oder nach erkanntem (annährenden) Stillstand (Block 40) des Motorrades 30.

Zur Aktivierung der Halte-Funktion (aktiver Druckaufbau mit anschließendem Druckhalten) betätigt der Fahrer also die Vorderradbremse (rechter Handbremshebel, z.B. inklusive Integralfunktion) mit einem höheren Druck p'_{HZ} als dem Druck p_{HZ}, welcher zur Erzielung des Fahrzeug-Stillstandes benötigt wurde. Daraufhin wird vom System ein ausreichender Druck im Hinterradbremskreis aufgebaut (Block 42) und dann gehalten (Block 43), um das Motorrad am Hang 34 zu halten.

Bei der Aktivierung der Halte-Funktion durch Betätigung eines Bremsbetätigungselements ist die Größe des im Hinterradbremskreis aufgebauten Bremsdruckes nicht von der Hangneigung 34 abhängig, da üblicherweise kein Sensor zur Bestimmung der Hangneigung vorhanden ist. Die Größe der aktiven Druckerhöhung (oder die Größe des Bremsdruckes) nach Fahrzeugstillstand kann in allen Fällen gleich sein (d.h. ein vorgegebener, konstanter Wert) oder in Abhängigkeit von Parametern, z.B. dem Beladungszustand des Motorrades 30 und/oder dem Motorradtyp, gewählt werden. Vorteilhafterweise ist auch hier der Druck gerade so bemessen, dass Motorrad 30 auch bei voller Beladung sicher am Hang 34 gehalten wird.

Beispielsgemäß werden Anfahrvorgänge, und damit ein Ende der Halte-Funktion, vom System erkannt (Block 44).

Gemäß eines ersten Ausführungsbeispiels des erfindungsgemäßen Verfahrens geschieht eine Anfahrtserkennung durch Beobachtung des Drosselklappenwinkels α und der Motordrehzahl n_{Motor}. Durch Beobachtung der Drosselklappenstellung α können ein Spielen am Gashebel und/oder Gasstöße im Leerlauf von einem Anfahrwunsch unterschieden werden.

Gemäß eines Verfahrens geschieht eine Anfahrtserkennung alleine durch Auswertung der Motordrehzahl nₘₒₜₒᵣ und ihres Gradienten n'_{Motor} (zeitliche Änderung). Weitere Zustandsparameter des Motorrades werden hierfür nicht herangezogen. Hierzu sollte Steuergerät 31, welches das Anfahren durch einen Bremsdruckabbau (Block 45) steuert, die Motordrehzahl nₘₒₜₒᵣ zur Verfügung stehen. In Steuergerät 31 wird dann der Gradient n'_{Motor} der Motordrehzahl ausgewertet. Anhand der nun vorliegenden Informationen ermittelt Steuergerät 31, ob Kraftschluss besteht.

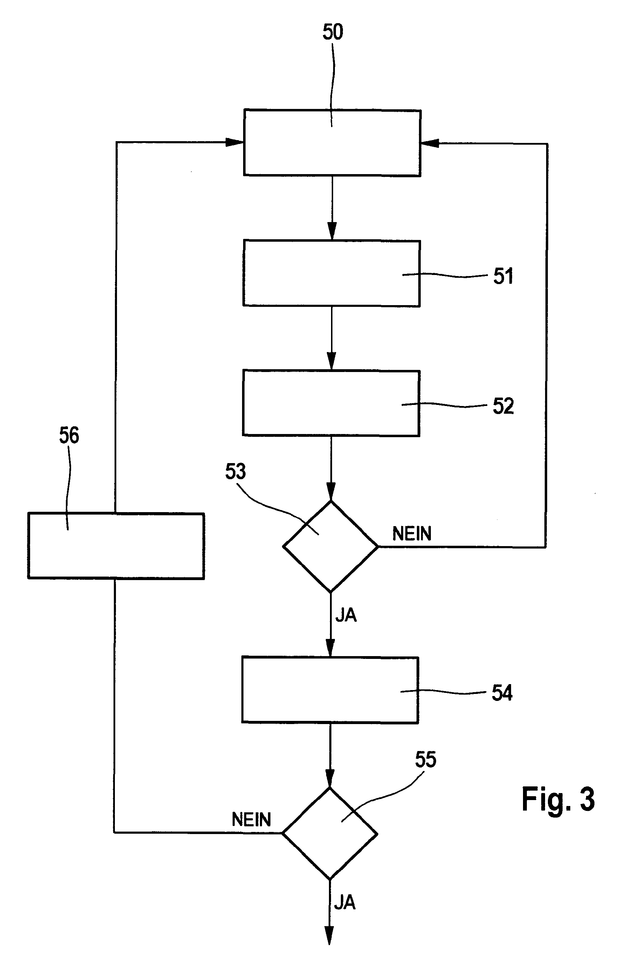

In Fig. 3 ist ein weiteres Verfahren zur Anfahrerkennung anhand einer Auswertung der Motordrehzahl nₘₒₜₒᵣ und ihres Gradienten n'_{Motor} schematisch in Form eines Flussdiagramms dargestellt. In Block 50 wird Motorrad 30 durch die Halte-Funktion des Fahrerassistenzsystems gehalten (korrespondiert zu Block 43 in Fig. 2). Der Fahrer erhöht das Motormoment (Block 51), da er anfahren möchte. Damit wird Motordrehzahl n_{Motor} größer als ein Schwellenwert nₛ (Block 52, n_{Motor} > nₛ). In Block 53 wird überprüft, ob Kraftschluss vorliegt. Hierzu wird beispielsgemäß geprüft, ob der Gradient n'_{Motor} der Motordrehzahl kleiner als ein Schwellenwert n'ₛ (Block 53, n'_{Motor} < n'ₛ ?). Wenn Gradient n'_{Motor} größer als der Grenzwert n'ₛ ist (NEIN in Block 53), dann wird Motorrad 30 weiterhin durch die Halte-Funktion des Fahrerassistenzsystems gehalten (Block 50). Wenn jedoch Gradient n'_{Motor} kleiner als der Grenzwert n'ₛ ist (JA in Block 53), so liegt Kraftschluss vor und das Fahrerassistenzsystem ermöglicht ein Anfahren durch einen geeigneten Bremsdruckabbau (Block 54, korrespondiert zu Block 45 in Fig. 2). In Block 55 wird überprüft, ob Motordrehzahl n_{Motor} immer noch größer als der Schwellenwert nₛ ist (n_{Motor} > nₛ ?). Sobald dies nicht mehr der Fall ist (NEIN in Block 55), wird in Block 56 der Bremsdruck wieder auf Halte-Niveau aufgebaut. Motorrad 30 wird dann wieder durch die Halte-Funktion des Fahrerassistenzsystems gehalten (Block 50). Solange Motordrehzahl n_{Motor} größer als der Schwellenwert nₛ ist (JA in Block 55), wird der Anfahrvorgang durchgeführt, bis er abgeschlossen ist und Motorrad 30 fährt.

Zur Beurteilung der Frage, ob Kraftschluss vorliegt, wird beispielsgemäß der Gradient n'_{Motor} der Motordrehzahl ausgewertet. Bei Kraftschluss kann dieser nur in einem definierten Bereich liegen. Somit kann ein möglicher Anfahrwunsch erkannt werden. Reduziert sich hingegen Motordrehzahl n_{Motor} wieder unterhalb eines Grenzwertes nₛ, ist davon auszugehen, dass der Fahrer den Anfahrvorgang abgebrochen hat. Somit ist der Bremsdruck zu halten oder ggf. wieder aufzubauen.

Um zu verhindern, dass es durch Schwankungen in der Motordrehzahl, die nicht durch den Fahrer initiiert sind, zur fehlerhaften Anfahrerkennung kommt, muss eine Mindestdrehzahl nₛ überschritten sein. Erst oberhalb dieser Mindestdrehzahl (siehe Block 52 und 55) darf der Anfahrvorgang freigegeben werden.

Beim Anfahren wird der zuvor aufrechterhaltene Bremsdruck im Hinterradbremskreis (Haltebremsdruck) über eine, z.B. vorgegebene, Rampenfunktion gezielt in der Art abgebaut, dass der Fahrer problemlos, ohne Rückrollbewegung anfahren kann. Die Steigung der Rampenfunktion ist dazu z.B. fest vorgegeben. Gemäß eines anderen Ausführungsbeispiels wird der Abbau des Bremsdrucks (Form des Bremsdruckabbaus und/oder Steigung der Rampenfunktion) in Abhängigkeit von der Stärke der Neigung der Fahrbahn 34 durchgeführt. Alternativ oder zusätzlichwird der Bremsdruckabbau (Form des Bremsdruckabbaus und/oder Steigung der Rampenfunktion) in Abhängigkeit von Fahrzeug-Parametern durchgeführt. Z.B. kann der Bremsdruck in Abhängigkeit der Änderung der Motordrehzahl n'_{Motor} abgebaut werden und/oder des Motormoments, falls dieses bekannt ist.

Der Bremsdruck kann beim Anfahren aber auch schlagartig abgebaut werden. Oder der Bremsdruck wird erst sprunghaft um einen vorgegebenen Betrag reduziert und dann gemäß einer linearen Funktion abgebaut.

Gemäß eines Ausführungsbeispiels wird der Bremsdruckabbau gemäß einer linearen Funktion durchgeführt, deren Steigung (Bremsdruckabbaugradient) in Abhängigkeit von dem Drosselklappenwinkel und dem Haltebremsdruck gewählt wird.

## Patentansprüche

1. Verfahren zur Erkennung einer Einleitung eines Anfahrvorgangs eines Kraftrades durch einen Fahrer, **dadurch gekennzeichnet, dass** die Zustandsgrößen Drosselklappenwinkel (α) und Motordrehzahl (n_{Motor}) des Kraftrades (30) erfasst werden, und ein Anfahren des Kraftrades (30) anhand einer Analyse der Zustandsgrößen erkannt wird (44).

2. Verfahren nach Anspruch 1, **dadurch gekennzeichnet, dass** zur Analyse der Zustandsgröße(n) die zeitliche(n) Ableitung (en) der Zustandsgröße (n) (n'_{Motor}) bestimmt wird/werden.

3. Verfahren nach Anspruch 1 oder 2, **dadurch gekennzeichnet, dass** bei einem erkannten Anfahrvorgang (44) des Kraftrades (30) ein in einem Radbremskreis zum Halten des Kraftrades (30) aufrechterhaltener Bremsdruck (43), insbesondere über eine vorgegebene lineare Abbaufunktion, wieder abgebaut wird (45).

4. Verfahren nach Anspruch 3, **dadurch gekennzeichnet, dass** der Abbau des Bremsdrucks (45) in Abhängigkeit von mindestens einem Umgebungsparameter (34) und/oder einer Zustandsgröße (α, n_{Motor}) des Kraftrades (30) durchgeführt wird, insbesondere in Abhängigkeit der Neigung der Fahrbahn (34) und/oder des Gradienten der Motordrehzahl (n'_{Motor}).

5. Verfahren nach mindestens einem der Ansprüche 1 bis 4, **dadurch gekennzeichnet, dass** zur Erkennung des Anfahrvorgangs (44) zusätzlich ein Motormoment analysiert wird.

6. Vorrichtung zur Erkennung einer Einleitung eines Anfahrvorgangs eines Kraftrades durch einen Fahrer mit einem Mittel zur Bestimmung der Zustandsgrößen Drosselklappenwinkel (α) und Motordrehzahl (n_{Motor}), und einem Analysemittel zur Analyse der Zustandsgrößen, **dadurch gekennzeichnet, dass** in diesem ein Verfahren gemäß mindestens einem der Ansprüche 1 bis 5 durchgeführt wird.

## Claims

1. Method for detecting the initiation of the starting process of a motorcycle by a rider, **characterized in that** the state variables of the throttle valve angle (α) and engine speed (n_{engine}) of the motorcycle (30) are acquired and starting of the motorcycle (30) is detected on the basis of analysis of the state variables (44).

2. Method according to Claim 1, **characterized in that** the derivative/derivatives of the state variable/variables (n'_{engine}) over time is/are determined in order to analyze the state variable/variables.

3. Method according to Claim 1 or 2, **characterized in that**, when a starting process (44) of the motorcycle (30) is detected, a brake pressure (43) which is maintained in a wheel brake circuit in order to hold the motorcycle (30) is reduced again (45), in particular by means of a predetermined linear reduction function.

4. Method according to Claim 3, **characterized in that** the reduction in the brake pressure (45) is carried out as a function of at least one ambient parameter (34) and/or one state variable (α, n_{engine}) of the motorcycle (30), in particular as a function of the gradient of the roadway (34) and/or the gradient of the engine speed (n'_{engine}) .

5. Method according to at least one of Claims 1 to 4, **characterized in that** in addition an engine torque is analyzed in order to detect the starting process (44).

6. Device for detecting initiation of a starting process of a motorcycle by a rider with a means for determining the state variables of the throttle valve angle (α) and engine speed (n_{engine}), and an analysis means for analyzing the state variables, **characterized in that** a method according to at least one of Claims 1 to 5 is carried out therein.

## Revendications

1. Procédé de reconnaissance d'une initiation d'un processus de démarrage d'une motocyclette par un conducteur, **caractérisé en ce que** les grandeurs d'état angle du clapet d'étranglement (α) et vitesse de rotation du moteur (n_{Motor}) de la motocyclette (30) sont captées et un démarrage de la motocyclette (30) est reconnu (44) au moyen d'une analyse des grandeurs d'état.

2. Procédé selon la revendication 1, **caractérisé en ce que** la/les dérivée(s) dans le temps de la/des grandeur (s) d'état (n'_{Motor}) est/sont déterminée (s) en vue de l'analyse de la/des grandeur(s) d'état.

3. Procédé selon la revendication 1 ou 2, **caractérisé en ce que** lors d'un processus de démarrage reconnu (44) de la motocyclette (30), une pression de freinage (43) maintenue dans un circuit de freinage de roue pour retenir la motocyclette (30) est de nouveau réduite (45), notamment par le biais d'une fonction de réduction linéaire prédéfinie.

4. Procédé selon la revendication 3, **caractérisé en ce que** la réduction de la pression de freinage (45) est accomplie en fonction d'au moins un paramètre d'environnement (34) et/ou d'une grandeur d'état (α, n_{Motor}) de la motocyclette (30), notamment en fonction de l'inclinaison de la chaussée (34) et/ou du gradient de la vitesse de rotation du moteur (n'_{Motor}).

5. Procédé selon au moins l'une des revendications 1 à 4, **caractérisé en ce qu'**un couple du moteur est en plus analysé pour reconnaître le processus de démarrage (44).

6. Dispositif de reconnaissance d'une initiation d'un processus de démarrage d'une motocyclette par un conducteur, comprenant des moyens pour déterminer les grandeurs d'état angle du clapet d'étranglement (α) et vitesse de rotation du moteur (n_{Motor}), et des moyens d'analyse pour analyser les grandeurs d'état, **caractérisé en ce qu'**un procédé selon au moins l'une des revendications 1 à 5 est mis en oeuvre dans celui-ci.
